# EUROPÄISCHE PATENTANMELDUNG

(11) **EP 1 241 452 A2**
(43) Veröffentlichungstag der Anmeldung: **18.09.2002**
(21) Anmeldenummer: 02003875.8
(22) Anmeldetag: 21.02.2002
(51) Int. Cl.: G01F 23/00, G01F 9/00

(54) **Verfahren für eine Tank-Füllstandsbestimmung bei Kraftfahrzeugen**

(30) Priorität: 13.03.2001 DE 10111923
(71) Anmelder: ROBERT BOSCH GMBH, 70442 Stuttgart (DE)
(72) Erfinder: Schelhas, Peter, 70329 Stuttgart (DE); Marx, Klaus, 70565 Stuttgart (DE); Braun, Hans, 70178 Stuttgart (DE); Muelders, Stefan, 71254 Ditzingen (DE)

(57) **Zusammenfassung**

Die Erfindung bezieht sich auf ein Verfahren zur Bestimmung des aktuellen Füllstands eines Kraftfahrzeugtanks, das folgende Verfahrensschritte umfaßt:
A) Bestimmung des Anfangsfüllstands (F_{A}) des Kraftfahrzeugtanks beim Start des Kraftfahrzeugmotors (1) als Eingangswert (F_{E}),
B) Ermittlung eines ersten Füllstandwerts (F₁) aus einem mit einer Füllstandmeßvorrichtung (3) gemessenen Füllstand (F_{G}) und Ermittlung eines zweiten Füllstandwertes (F₂) und eines Fensters (ΔF) um den zweiten Füllstandwert (F₂) aus einem Verbrauch (V) des Kraftfahrzeugmotors und aus dem Eingangswert (F_{E});
C) Vergleich des ersten Füllstandwerts (F₁) mit dem Fenster (ΔF) um den zweiten Füllstandwert (F₂);
D) Entscheidung, ob der erste oder der zweite Füllstandwert (F₁, F₂) der neue Eingangswert (F_{E}) sein soll;
E) Anzeige (7) des neuen Eingangswerts (F_{E}) als Füllstand und
F) Beendigung des Verfahrens (19), falls der Kraftfahrzeugmotor ausgeschaltet (17) ist oder Wiederholung des Verfahrens ab Verfahrensschritt B, falls der Kraftfahrzeugmotor läuft (18).

## Beschreibung

### Technisches Gebiet

In modernen Kraftfahrzeugen dienen Füllstandmeßvorrichtungen zur Erfassung des Füllstands des Kraftstoffs (Benzin, Diesel...) in dem Kraftstofftank. Der aktuelle Füllstand wird dem Kraftfahrzeugfahrer über eine Anzeige mitgeteilt, so daß er die zu erwartende Reichweite des Kraftfahrzeugs mit dem im Tank verbleibenden Kraftstoff und die Notwendigkeit, den Tank aufzufüllen, einschätzen kann.

### Stand der Technik

Seit mehr als 20 Jahren sind Füllstandmeßvorrichtungen für Tanks bekannt, bei denen der Auftriebskörper eines drehbar gelagerten Schwimmers im Bereich des Flüssigkeitsspiegels der in dem betreffenden Tank befindlichen Flüssigkeit schwimmt. Die Drehachse des Schwimmers, die in der Regel unterhalb des höchstmöglichen Flüssigkeitsstandes liegt, ist mit der Eingangsseite eines mechanischen Getriebes verbunden, an dessen Ausgangsseite ein Magnet montiert ist. Die von dem Füllstand der Flüssigkeit abhängende Winkelstellung des Schwimmers wird so auf den Magneten übertragen, dessen Winkelstellung somit ein Maß für den Füllstand ist. Der Magnet befindet sich in der Nähe der Außenseite des Tanks. Seine Drehstellung wird bei älteren Ausführungsformen der vorbekannten Füllstandmeßvorrichtung durch eine Gehäusewandung hindurch von einem zweiten drehbar gelagerten Magneten erfaßt, der mechanisch mit einer Anzeigeeinrichtung gekoppelt ist. Diese Füllstandmeßvorrichtung eignet sich für Tanks, in denen brennbare oder explosionsgefährdete Flüssigkeiten gelagert werden. Denn bei dem Getriebe, das im explosionsgefährdeten Bereich angeordnet ist, ist keine hinsichtlich ihrer Dichtheit problematische Durchführung durch die Tankwandung erforderlich. In späteren Ausführungsformen der vorbekannten Füllstandmeßvorrichtung ist der außerhalb des Tankinnenraums gelagerte Magnet durch einen Magnetfeldsensor ersetzt, der mit einer elektronischen Auswerteeinrichtung verbunden ist. Dieser Sensor erfaßt das von der Winkelstellung des Magneten abhängende Magnetfeld, das ein Maß für den Füllstand ist und mit Hilfe der Auswerteeinrichtung in einen Füllstandwert umgewandelt werden kann.

DE 199 25 185 A1 betrifft eine Füllstandmeßvorrichtung für einen Tank mit einem um eine Drehachse drehbar gelagerten Schwimmer und mit einem ein erstes Ende und ein zweites Ende aufweisenden Rohr, das dazu eingerichtet ist, mit seinem zweiten Ende bis zur Außenseite des Tanks zu reichen und das gegenüber dem Innenraum des Tanks abgedichtet ist. Im Bereich des ersten Endes des Rohrs und außerhalb des Rohrs an der Drehachse des Schwimmers ist ein Magnet montiert. Gegenüber dem Magnet im Innenraum des Rohrs ist ein Magnetfeldsensor angeordnet, der dazu eingerichtet ist, ein von der Winkelstellung des Schwimmers abhängiges Signal über eine elektrische Leitung an einer Auswerteeinrichtung auszugeben.

In D. Sparks, T. Noll, D. Agrotis, T. Betzner, K. Gschwend, *Multi-Sensor Modules with Data Bus Communication Capability*, SAE Technical Paper Series 1999-01-1277 wird ein Multisensorkonzept diskutiert, das in einem Kraftfahrzeug den Datenaustausch über einen Datenbus realisiert. Dabei wird eine Vielzahl von Sensoren in einem Gehäuse zu einer Gruppe zusammengefaßt. Dieses Multisensormodul teilt sich ein einziges Set von Kommunikationschips und wird dadurch zu einem "intelligenten" Sensornetzwerk.

DE 40 25 184 A1 betrifft einen Sensor zur Erfassung der Beschleunigung bzw. Neigung, insbesondere für Kraftfahrzeuge. Er weist einen zylinderförmigen Flüssigkeitsbehälter auf, in dem sich eine elektrisch leitfähige Flüssigkeit befindet. In den Flüssigkeitsbehälter ragen von unten zwei Elektroden, die mit einem Dielektrikum überzogen sind. Die Elektroden und die leitfähige Flüssigkeit arbeiten als Kondensator. Aus den Kapazitäten dieser Kondensatoren wird die Lage des Sensors und damit dessen Neigung ermittelt.

Im Stande der Technik sind verschiedene Beschleunigungssensoren bekannt. Gemäß dem *Kraftfahrtechnischen Taschenbuch,* Bosch, 23. Auflage, Viehweg Verlag (1999), Seiten 103 bis 109 eignen sich zum Beispiel folgende Sensoren zur Erfassung von Kurvenbeschleunigungen und Geschwindigkeitsänderungen: induktive Sensoren, Hall-Sensoren, mikromechanische Silicium-Drehratensensoren, Hall-Beschleunigungssensoren, piezoelektrische Sensoren oder kapazitive Silicium-Beschleunigungssensoren.

Vorrichtungen und Verfahren zur Ermittlung des momentanen Kraftstoffverbrauchs in einem Kraftfahrzeugmotor existieren bereits im Stande der Technik.

Nachteile der im Stande der Technik verwendeten Füllstandmeßvorrichtungen sind, daß die Meßwerte durch Schwappbewegungen, insbesondere bei der Beschleunigung und Verzögerung des Kraftfahrzeugs, durch Kurven und durch Steigungsfahrten verfälscht werden, so daß die Tankanzeige Werte anzeigt, die nicht korrekt sind oder stark schwanken. Zusätzlich gibt es hauptsächlich im Restmengenbereich Ungenauigkeiten, die durch das Anstoßen des Schwimmers auf dem Tankboden verursacht werden.

### Darstellung der Erfindung

Die vorliegende Erfindung offenbart ein Verfahren zur Bestimmung des aktuellen Füllstands eines Kraftfahrzeugtanks, das folgende Verfahrensschritte umfaßt:
A) Bestimmung des Anfangsfüllstands des Kraftfahrzeugtanks beim Start des Kraftfahrzeugmotors als Eingangswert;
B) Ermittlung eines ersten Füllstandwertes aus einem mit einer Füllstandmeßvorrichtung gemessenen Füllstand und Ermittlung eines zweiten Füllstandwertes und eines Fensters um den zweiten Füllstandwert aus einem Verbrauchswert des Kraftfahrzeugmotors und aus dem Eingangswert;
C) Vergleich des ersten Füllstandwertes mit dem Fenster um den zweiten Füllstandwert;
D) Entscheidung, ob der erste oder der zweite Füllstandwert der neue Eingangswert sein soll;
E) Anzeige des neuen Eingangswerts als Füllstand und
F) Beendigung des Verfahrens, falls der Kraftfahrzeugmotor ausgeschaltet ist oder Wiederholung des Verfahrens ab Verfahrensschritt B, falls der Kraftfahrzeugmotor läuft.

Der aktuelle Füllstand bedeutet in diesem Zusammenhang der zu einem bestimmten Zeitpunkt mit Kraftstoff gefüllte Anteil des Tankvolumens. Der Anfangsfüllstand ist derjenige Füllstand, der direkt nach dem Start des Kraftfahrzeugmotors aus dem mit der Füllstandmeßvorrichtung gemessenen Füllstand ermittelt wird und anschließend als Eingangswert für die nachfolgenden Verfahrensschritte verwendet wird, bis sich ein neuer Eingangswert ergibt.

Bei der Füllstandmeßvorrichtung kann es sich um eine herkömmliche, im Stande der Technik verwendete Füllstandmeßvorrichtung für einen Tank handeln. Denkbar ist eine Füllstandmeßvorrichtung, die einen um eine Drehachse drehbar gelagerten Schwimmer enthält, dessen Winkelstellung beispielsweise mit Hilfe eines Magneten und eines Magnetfeldsensors oder unter Verwendung eines Potentiometers ermittelt wird. Ebenso sind Füllstandsensoren denkbar, die die Kapazität oder den Widerstand zwischen im Tank angeordneten Elektroden messen. Für die vorliegende Erfindung sind jedoch auch jegliche andere Bauarten von Füllstandmeßvorrichtung geeignet.

Der Verbrauchswert des Kraftfahrzeugs, beispielsweise der momentane Verbrauch, liegt bei Motoren mit Kraftstoffeinspritzung im Stande der Technik bereits vor.

Ein Fenster um einen Füllstandwert bedeutet in diesem Zusammenhang einen Bereich um den Füllstandwert, also einen Wertebereich, der in jedem Fall den Füllstandwert selbst enthält, aber auch den Füllstandwert umgebende größere und/oder kleinere Werte einschließt.

Die Anzeige des neuen Eingangswertes als aktuellen Füllstand kann durch eine im Stande der Technik bereits im Kraftfahrzeug vorhandene Füllstandanzeige erfolgen. Dabei kann es sich zum Beispiel um eine analoge Anzeige handeln, die sich in dem Fahrerinformationsbereich des Kraftfahrzeugs befindet, möglicherweise als Bestandteil des Kombiinstruments.

Falls der Kraftfahrzeugmotor ausgeschaltet ist, ändert sich der Füllstand nicht mehr. Eine erneute Bestimmung des Tankfüllstandes ist demnach überflüssig.

Die Vorteile des erfindungsgemäßen Verfahrens sind darin zu sehen, daß die Genauigkeit der Füllstandanzeige erhöht wird und daß eine genauere Reichweitenbestimmung des Kraftfahrzeugs möglich wird. Die Genauigkeit wird vor allem dadurch erhöht, daß der im Stande der Technik vorhandene Einfluß der Dynamik des Tankinhaltes auf die Anzeige, insbesondere bei Schwappvorgängen und Kurvenfahrten eliminiert wird. Ein weiterer Vorteil ist, daß Ungenauigkeiten, die im Restmengenbereich durch Anstoßen des Schwimmers der Füllstandmeßvorrichtung auf dem Tankboden auftreten können, weitgehend beseitigt werden. Vorteilhaft ist ebenso, daß die zur Anwendung des Verfahrens benötigten Meßvorrichtungen, Sensoren und Rechner bereits in dem Kraftfahrzeug vorhanden sind. Erforderliche Erweiterungen der bisherigen Tankanzeige treten nur in Form von Software auf, Hardware wird zusätzlich nicht benötigt, was sich wiederum positiv auf die Kosten des Verfahrens auswirkt.

Bei einer Ausführungsform der Erfindung umfaßt die Bestimmung des Anfangsfüllstands des Kraftfahrzeugtanks beim Start des Kraftfahrzeugmotors mindestens einen der folgenden Schritte:
- Messung des Füllstands mit der Füllstandmeßvorrichtung und
- Korrektur des gemessenen Füllstands.

Der Füllstand des Tanks beim Start des Kraftfahrzeugmotors kann demnach aus einem mit der oben beschriebenen Füllstandmeßvorrichtung gemessenen Füllstand ermittelt werden. Dabei ist davon auszugehen, daß sich das Kraftfahrzeug beim Start des Kraftfahrzeugmotors nicht bewegt und somit Fehler des gemessenen Füllstands aufgrund der Dynamik des Tankinhaltes ausgeschlossen werden können. Des weiteren kann die Bestimmung des Füllstands beim Start des Kraftfahrzeugmotors eine Korrektur des mit der Füllstandmeßvorrichtung gemessenen Startfüllstandes umfassen, insbesondere Meßfehler, die sich aufgrund der Neigung oder Schräglage des Kraftfahrzeugs ergeben. Durch eine Neigung oder Schräglage des Kraftfahrzeugs folgt eine Neigung oder Schräglage der Kraftstoffoberfläche in dem Tank, die zu einer Verfälschung des gemessenen Füllstands führen können. Die Korrektur des gemessenen Füllstands kann gemäß einer Ausführungsform der Erfindung unter Zuhilfenahme von Kraftfahrzeuglage-Informationen erfolgen. Diese können die Neigung oder Schräglage des Kraftfahrzeugs umfassen, wobei diese beiden Größen durch mindestens einen Sensor erfaßt werden. Sensoren zur Erfassung von Kraftfahrzeuglage-Informationen sind im Stande der Technik bereits in das Kraftfahrzeug integriert.

Bei einer Ausführungsform der vorliegenden Erfindung umfaßt die Ermittlung des Füllstandwertes aus dem mit der Füllstandmeßvorrichtung gemessenen Füllstand mindestens einen der folgenden drei Schritte:
- Messung des Füllstands mit der Füllstandmeßvorrichtung;
- Korrektor des gemessenen Füllstands und
- Bildung des gleitenden Mittelwertes.

Als Füllstandmeßvorrichtung sind wiederum Füllstandmeßvorrichtungen jeglicher Bauart geeignet, insbesondere bereits aus dem Stande der Technik bekannte. Die Korrektur des gemessenen Füllstands erfolgt vorzugsweise unter Zuhilfenahme von Kraftfahrzeuglageund/oder Beschleunigungsinformationen. Die Kraftfahrzeuglage-Informationen können dabei die Neigung oder die Schräglage des Kraftfahrzeugs umfassen, wobei diese beiden Größen durch mindestens einen Sensor erfaßt werden. Die erforderlichen Sensoren zur Erfassung der Kraftfahrzeuglage und Beschleunigungsinformationen sind in modernen Fahrzeugen bereits enthalten, zum Beispiel die für Fahrdynamiksysteme wie ESP oder für die Leuchtweitenregulierung erforderliche Fahrzeuglage- oder Beschleunigungssensoren. Der Einfluß der Fahrzeuglage- und der Beschleunigung auf die Füllstandmeßvorrichtung kann durch Korrekturalgorithmen korrigiert werden. Die Korrekturalgorithmen basieren unter anderem auf der Kenntnis des Verlaufs des durch die Füllstandmeßvorrichtung gemessenen Füllstands in Abhängigkeit von der Fahrzeuglage und der Beschleunigung. Durch die Korrektur des gemessenen Füllstands wird auf den Füllstand, den das Fahrzeug in der Ebene aufweisen würde, zurückgerechnet. Durch diese rechnerische Korrektur wirkt es sich auf den ermittelten ersten Füllstandwert nicht mehr aus, daß sich das Fahrzeug längere Zeit auf einer Steigungs- oder Gefällefahrt, in Schräglage oder in einer Beschleunigungsphase befindet. Der so erhaltene korrigierte Füllstand unterliegt jedoch Schwankungen, die auf die Dynamik des Tankinhaltes wie z.B. Schwappvorgänge zurückzuführen sind. Diese Schwankungen können durch Bildung eines gleitenden Mittelwertes über einen längeren Zeitraum bis zu einem bestimmten Maß kompensiert, jedoch nicht völlig eliminiert werden. Unter einem gleitenden Mittelwert ist in diesem Zusammenhang ein Mittelwert zu verstehen, der mit den Werten in einem bestimmten Intervall vor dem aktuell gemessenen Wert berechnet wird. Dabei handelt es sich um ein Kurvenglättungsverfahren, durch das Spitzenwerte und Ausreißer geglättet werden. Es existieren verschiedene Berechnungsarten für gleitende Mittelwerte, so daß sich beispielsweise ein arithmetischer, ein exponentiell gewichteter, ein linear gewichteter oder ein quadratisch gewichteter gleitender Mittelwert ergibt.

Nach einer bevorzugten Ausführungsform der vorliegenden Erfindung umfaßt die Ermittlung des zweiten Füllstandwertes und des Fensters um den zweiten Füllstandwert folgende Schritte:
- Bestimmung des Verbrauchs durch Aufintegration des Momentanverbrauchs;
- Berechnung des zweiten Füllstandwertes durch Bildung der Differenz von Eingangswert und Verbrauch und
- Berechnung des Fensters um den zweiten Füllstandwert aus den Fehlern in der Bestimmung des Verbrauchs.

Die Information über den Momentanverbrauch liegt bei Motoren mit Kraftstoffeinspritzung bereits vor. Der Momentanverbrauch wird aufintegriert, um den Absolutverbrauch zu kennen, der von dem Eingangswert abgezogen wird, um den zweiten Füllstandwert zu berechnen. Der Eingangswert ist dabei entweder der gemessene (und eventuell korrigierte) Füllstand direkt nach dem Start des Kraftfahrzeugs oder der zuletzt auf der Füllstandanzeige angezeigte Füllstand. Das Fenster wird aus dem Fehler der Verbrauchsermittlung berechnet. Dieser Fehler nimmt aufgrund der Aufsummierung kleiner Größen (Aufintegration) mit der Zeit zu. Dieses Fenster definiert dann den Bereich, in dem sich der Füllstand des Kraftfahrzeugtanks real befindet. Es wird begrenzt durch den maximal und den minimal möglichen Füllstand, der sich aus dem größtmöglichen Fehler ergibt.

Aus der Kombination von erstem und zweitem Füllstandwert, also von korrigiertem gemessenen Füllstand und der Momentanverbrauchsinformation resultiert ein genauerer Füllstand, der durch die Füllstandanzeige angezeigt wird und als neuer Eingangswert dient. Es ist dabei zweckmäßig, daß der erste Füllstandwert der neue Eingangswert ist, falls der erste Füllstandwert in dem Fenster um den zweiten Füllstandwert liegt und daß der zweite Füllstandwert der neue Eingangswert ist, falls der erste Füllstandwert außerhalb des Fensters um den zweiten Füllstandwert liegt. Im ersten Fall wird das Fenster bei dem nächsten Durchlauf des Verfahrens sehr klein, da der Füllstandwert als genau angenommen wird und die Berechnung des Absolutverbrauchs von diesem neuen "genauen" Eingangswert ausgeht. Im zweiten Fall wird das Fenster beim nächsten Durchlauf des Verfahrens größer, da die Aufintegration des Momentanverbrauchs fortgesetzt wird und sich der Fehler dadurch vergrößert. Der sich ergebende, mit der Zeit anwachsende Fehler aus der Verbrauchsberechnung wird durch die Kombination mit dem korrigierten Meßwert der Füllstandmeßvorrichtung so gering wie möglich gehalten.

Vorteilhaft bei dem vorliegenden Multisensorprinzip, das Meßwerte der Füllstandmeßvorrichtung, der Neigungs- und Schräglagesensoren, der Beschleunigungssensoren und der Sensoren zur Momentanverbrauchsbestimmung kombiniert, ist, daß die Erweiterung eines modernen Kraftfahrzeugs zur Durchführung des erfindungsgemäßen Verfahrens nur in Form von Software erforderlich ist. Hardware wird zusätzlich nicht benötigt, da die benötigten Komponenten im Stande der Technik bereits im Kraftfahrzeug vorhanden sind. Die erforderlichen Berechnungen und Korrekturalgorithmen können von bereits im Fahrzeug befindlichen Rechnern, beispielsweise dem Motorsteuergerät oder dem Steuergerät des Kombi-Instruments durchgeführt werden.

Dem Fahrer des Kraftfahrzeugs wird der Füllstand des Kraftfahrzeugtanks über geeignete Anzeigeninstrumente, die mit den oben genannten Rechnern verbunden sind, mitgeteilt. In einer bevorzugten Ausführungsform der vorliegenden Erfindung ist die Anzeige eine digitale Anzeige. Dies war bisher im Stande der Technik nicht möglich, da der angezeigte Füllstand zu starken Schwankungen unterworfen war und eine digitale Anzeige somit schlecht ablesbar gewesen wäre. Bei dem gemäß der vorliegenden Erfindung ermittelten genaueren Füllstand sind die Schwankungen stark reduziert und deshalb ist eine digitale Anzeige möglich.

Bei einer Ausführungsform der Erfindung erfolgt eine Anzeige der sich aus dem aktuellen Füllstand ergebenden erwarteten Reichweite des Kraftfahrzeugs. Durch die genauere Kenntnis des Füllstands des Kraftfahrzeugtanks erhöht sich auch die Genauigkeit der erwarteten Reichweite. Unter der Reichweite eines Kraftfahrzeugs ist dabei der Weg zu verstehen, der mit dem im Kraftfahrzeugtank verbleibenden Kraftstoff gefahren werden kann.

Die Korrektur der aus der Fahrzeuglage resultierenden Füllstandmeßfehler kann alternativ zu den oben beschriebenen Methoden durch geschickten Einbau einer oder mehrerer Tankstandgeber als Füllstandmeßvorrichtung erfolgen. In einer Ausführungsform der Erfindung dient bei einem symmetrischen Tank ein zentral angeordneter Tankstandgeber als Füllstandmeßvorrichtung. Vorteilhaft ist dabei, daß sich eine Neigung der Kraftstoffoberfläche an der zentralen Stelle am geringsten auf den gemessenen Füllstand auswirkt. In einer weiteren Ausführungsform der Erfindung dienen bei einem Satteltank mindestens zwei in beiden Kammern angeordnete Tankstandgeber als Füllstandmeßvorrichtung.

Weiterhin betrifft die Erfindung die Verwendung des erfindungsgemäßen Verfahrens zur Überprüfung der Funktion der Füllstandmeßvorrichtung, wobei bei jedem Durchlauf des Verfahrens nach dem Vergleich des ersten Füllstandwerts mit dem Fenster um den zweiten Füllstandwert kontrolliert wird, wie häufig der erste Füllstandwert innerhalb des Fensters liegt. Liegt der erste Füllstandwert häufig in dem Fenster, so stimmen errechneter Füllstand und durch die Füllstandmeßvorrichtung gemessener Füllstand häufig überein und die Füllstandmeßvorrichtung funktioniert. Stimmen die Werte selten überein, so ist davon auszugehen, daß die Füllstandmeßvorrichtung defekt ist.

### Zeichnung

Anhand der Zeichnung wird die Erfindung nachstehend näher erläutert.

Es zeigt:
- Figur 1: einen Ablaufplan eines erfindungsgemäßen Verfahrens;
- Figur 2: die prinzipielle Anordnung zur Realisierung des erfindungsgemäßen Verfahrens nach einem Multisensorkonzept;
- Figur 3: ein Beispiel für den durch das erfindungsgemäße Verfahren ermittelten Füllstandsverlauf und
- Figur 4: einen vergrößerten Ausschnitt aus Figur 3.

### Ausführungsvarianten

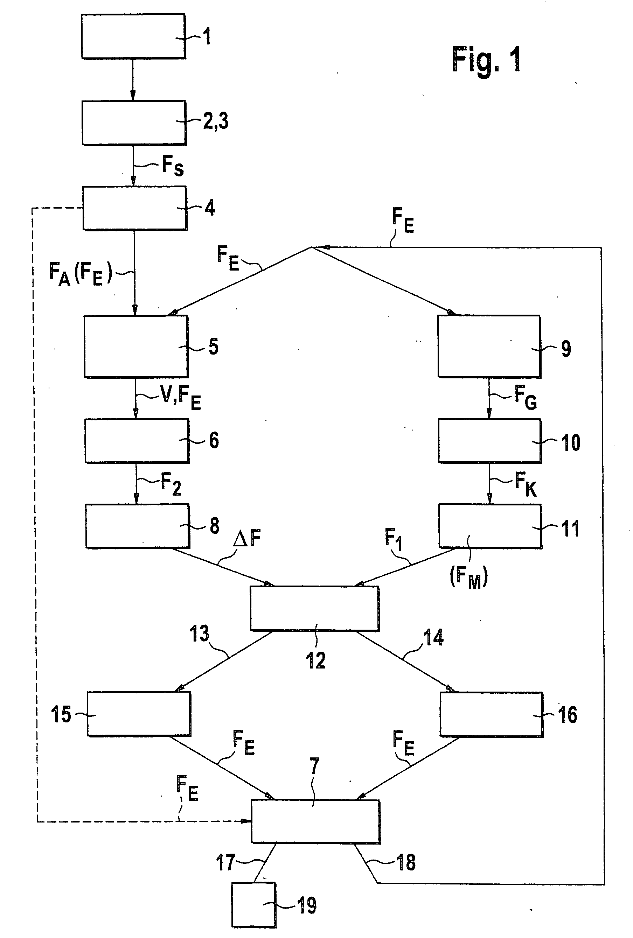

Figur 1 zeigt einen Ablaufplan eines erfindungsgemäßen Verfahrens.

Direkt nach dem Start des Kraftfahrzeugmotors 1 folgt eine Messung des Startfüllstands 2 im Kraftfahrzeugtank durch eine Füllstandmeßvorrichtung 3. Der gemessene Startfüllstand F_{S} erfährt eine Korrektur 4 auf der Grundlage von Kraftfahrzeuglage-Informationen, woraus sich der Anfangsfüllstand F_{A} ergibt, der als Eingangswert F_{E} dient. Der Eingangswert F_{E} kann an die Füllstandanzeige 7 weitergegeben werden, so daß diese den Eingangswert F_{E} als aktuellen Füllstand anzeigt. Aus dem Eingangswert F_{E} und durch eine Aufintegration des Momentanverbrauchs 5 kann die Berechnung 6 des zweiten Füllstandwertes F₂ erfolgen. Aus dem Fehler ΔF des Verbrauchs V, der sich aus der Aufintegration des Momentanverbrauchs ergibt, wird ein Fenster ΔF um den zweiten Füllstandwert F₂ gebildet 8. Parallel zur Ermittlung des zweiten Füllstandwerts F₂ und des Fensters ΔF wird der erste Füllstandwert F₁ ermittelt, durch Messung des Füllstands 9 mit einer Füllstandmeßvorrichtung, Korrektur 10 des gemessenen Füllstands F_{G} auf der Grundlage von Fahrzeuglage und Beschleunigungsinformationen (F_{K}) und durch Bildung des gleitenden Mittelwerts 11 (F_{M}). Der errechnete gleitende Mittelwert F_{M} ist der erste Füllstandwert F₁. In der anschließenden Fallunterscheidung 12 wird geprüft, ob der erste Füllstandwert F₁ in dem Fenster ΔF liegt. Im ersten Fall 13 liegt der erste Füllstandwert F₁ nicht in dem Fenster ΔF und der zweite Füllstandwert F₂ dient als neuer Eingangswert F_{E} (F_{E} = F₂) 15. Im zweiten Fall 14 liegt der erste Füllstandwert F₁ innerhalb des Fensters ΔF und der erste Füllstandwert F₁ dient als neuer Eingangswert F_{E} (F_{E} = F₁) 16. Die Füllstandanzeige 7 zeigt den neuen Eingangswert F_{E} als aktuellen Füllstand an. Dann wird das Verfahren beendet 19, falls der Kraftfahrzeugmotor abgestellt ist 17 und falls der Kraftfahrzeugmotor läuft 18, beginnt das Verfahren wieder mit der erneuten parallelen Ermittlung des ersten und des zweiten Füllstandwertes (F₁, F₂). Diese Prozedur wird wiederholt, solange das Kraftfahrzeug in Betrieb ist.

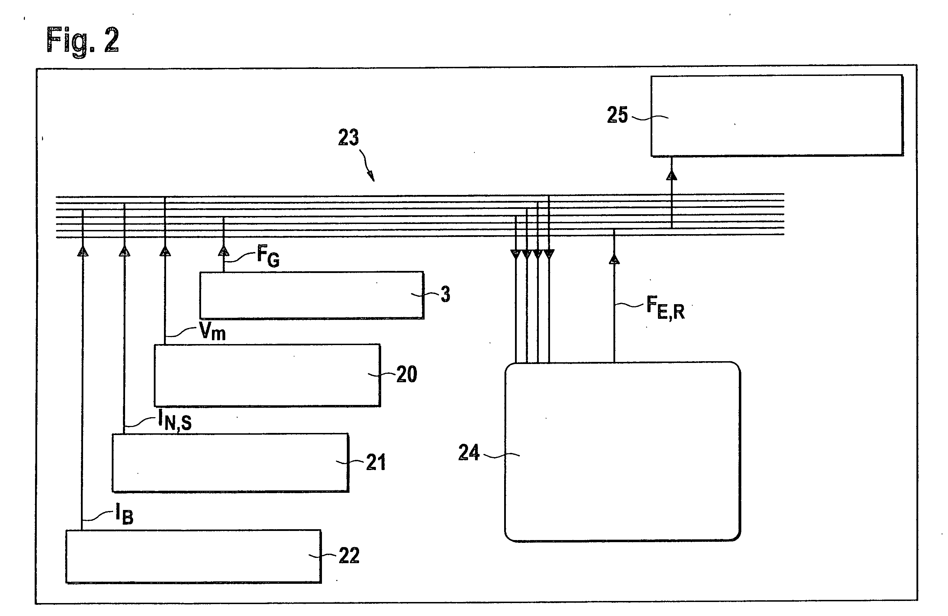

Figur 2 zeigt die prinzipielle Anordnung zur Realisierung des erfindungsgemäßen Verfahrens nach einem Multisensorkonzept.

Eine Füllstandmeßvorrichtung 3, Sensoren zur Ermittlung des Momentanverbrauchs 20, Neigungs- und Schräglagesensoren 21 und Beschleunigungssensoren 22 sind mit einem im Kraftfahrzeug vorhandenen Informationsweg 23, zum Beispiel einem CAN-Bus, verbunden. Die Meßwerte der Sensoren, also gemessener Füllstand F_{G}, Momentanverbrauch Vₘ, Neigungs- und Schräglageinformationen I_{N,S} und/oder Beschleunigungsinformationen I_{B} werden über den Informationsweg 23 an einen Rechner 24 weitergegeben. Bei dem Rechner 24 kann es sich beispielsweise um ein Steuergerät des Kombiinstruments oder der Motorsteuerung handeln. Der Rechner 24 führt die erforderlichen Berechnungen und Korrekturalgorithmen durch. Dazu gehören die Korrektur des mit der Füllstandmeßvorrichtung 3 gemessenen Füllstands F_{G} auf der Grundlage der Neigungs-/Schräglage- und/oder Beschleunigungsinformationen (I_{N,S}, I_{B}). Die Bildung des gleitenden Mittelwerts F_{M} ist ebenfalls Aufgabe des Rechners 24. Des weiteren dient der Rechner 24 zur Aufintegration des Momentanverbrauchs Vₘ und zur Berechnung des zweiten Füllstandwerts F₂ und des Fensters ΔF. Nachdem die Fallunterscheidung 12 stattgefunden hat, wird ein neuer Eingangswert F_{E} und eventuell die berechnete Reichweite R von dem Rechner 24 über den Informationsweg 23 an die Füllstandanzeige (bzw. die Reichweitenanzeige) 25 weitergegeben.

### Beispiel:

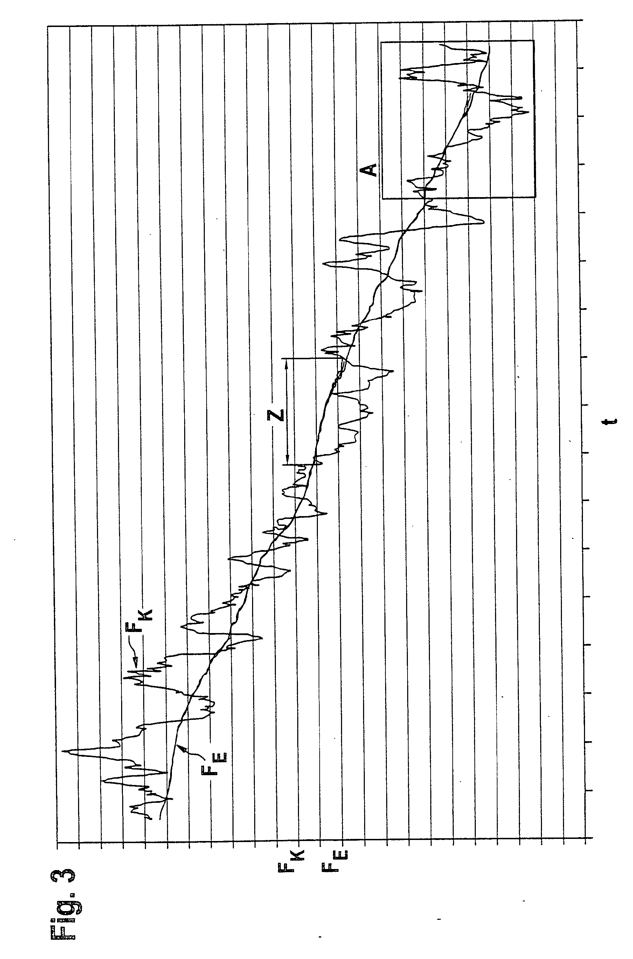

Figur 3 zeigt ein Beispiel für den durch das erfindungsgemäße Verfahren ermittelten Füllstandverlauf.

Der Verlauf des korrigierten, mit der Füllstandmeßvorrichtung gemessenen Füllstands F_{K} und der von der Füllstandanzeige angezeigte Eingangswert F_{E} sind als Funktion der Zeit t dargestellt. Der korrigierte gemessene Füllstand F_{K} weist deutliche Schwankungen in der Größenordnung von mehreren Litern auf. Diese Schwankungen sind eine Folge der Dynamik des Tankinhalts. Der aus dem erfindungsgemäßen Verfahren resultierende Eingangswert F_{E}, der dem Kraftfahrzeugfahrer über die Füllstandanzeige mitgeteilt wird, ist deutlich glatter. Es sind viele Schnittpunkte des Eingangswertes F_{E} mit dem korrigierten gemessenen Füllstand F_{K} zu erkennen. Mit Hilfe des Multisensorkonzepts, bestehend aus Füllstandmeßvorrichtung, Momentanverbrauchsmessung, Schräglagen- und Neigungssensoren oder Beschleunigungssensoren, erreicht der durch die Füllstandanzeige angezeigte Eingangswert F_{E} eine Genauigkeit von +/- 11. Der Einfluß der Dynamik des Tankinhalts auf den korrigierten gemessenen Füllstand F_{K}, insbesondere bei Schwappvorgängen und Kurvenfahrten, wird durch das erfindungsgemäße Verfahren eliminiert, insbesondere durch die Berücksichtigung des Momentanverbrauchs.

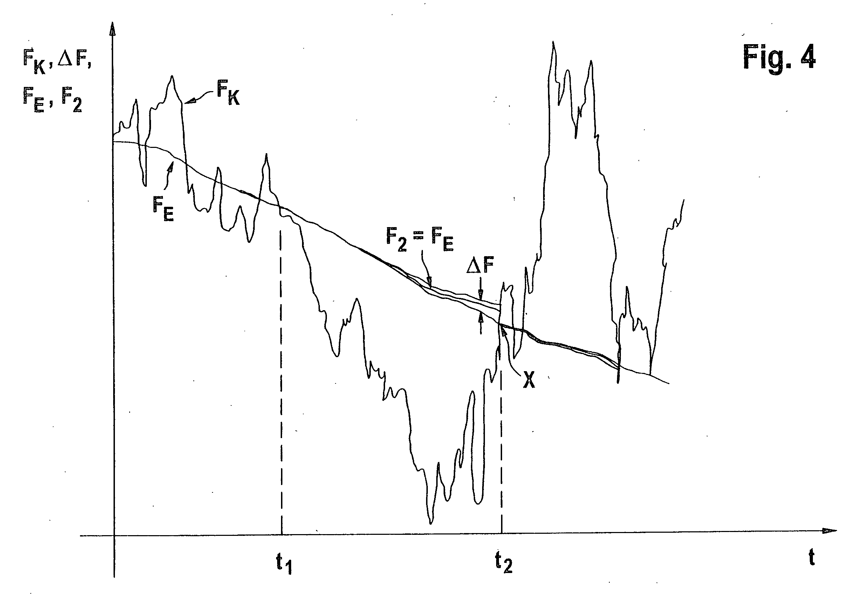

Liegt ein größerer Zeitabschnitt zwischen zwei Schnittpunkten des korrigierten gemessenen Füllstands F_{K} mit dem Maximal- oder Minimalwert des Fensters ΔF um den 2.Füllstandwert F₂, wie beispielsweise Zeitabschnitt Z, so erkennt man eine Ausweitung des Fehlerfensters ΔF um den 2.Füllstandwert F₂. F₂ ist innerhalb dieses Zeitabschnitts Z der Eingangswert F_{E}. Das Fenster ΔF soll anhand der Figur 4 näher erläutert werden.

Figur 4 zeigt den vergrößerten Ausschnitt A aus Figur 3. Zwischen dem Zeitpunkt t₁ und dem Zeitpunkt t₂ liegt kein Schnittpunkt des korrigierten gemessenen Füllstands F_{K} mit dem Maximal- oder Minimalwert des Fensters ΔF um den 2.Füllstandwert F₂. Um F₂ weitet sich in diesem Bereich deutlich erkennbar das Fenster ΔF auf, da die Fehler aufgrund der Aufintegration des Momentanverbrauchs anwachsen. Solange der zweite Füllstandwert F₂ als Eingangswert F_{E} übernommen wird, wachsen die Fehler an. Erst bei einem Schnittpunkt, wenn der erste Füllstandwert F₁ in dem Fenster ΔF liegt, wird der erste Füllstandwert F₁ als Eingangswert F_{E} übernommen und der Fehler des Verbrauchs auf Null gesetzt. Dies ist am Punkt X deutlich zu erkennen. Die Breite des Fensters ΔF wird an diesem Punkt X erneut auf Null gesetzt.

### Bezugszeichenliste

- 1: Start des Kraftfahrzeugmotors
- 2: Messung des Startfüllstands
- 3: Füllstandmeßvorrichtung
- 4: Korrektur des gemessenen Startfüllstands
- 5: Aufintegration des Momentanverbrauchs
- 6: Berechnung des zweiten Füllstandwertes
- 7: Füllstandanzeige
- 8: Bildung eines Fensters um den zweiten Füllstandwert
- 9: Messung des Füllstands
- 10: Korrektur des gemessenen Füllstands
- 11: Bildung des gleitenden Mittelwerts
- 12: Fallunterscheidung
- 13: erster Fall: F₁ liegt nicht in ΔF
- 14: zweiter Fall: F₁ liegt in ΔF
- 15: F_{E} = F₂
- 16: F_{E} = F₁
- 17: Kraftfahrzeugmotor abgestellt
- 18: Kraftfahrzeugmotor läuft
- 19: Verfahren beendet
- 20: Sensoren zur Ermittlung des Momentanverbrauchs
- 21: Neigungs- und Schräglagesensoren
- 22: Beschleunigungssensoren
- 23: Informationsweg
- 24: Rechner
- 25: Füllstandanzeige und/oder Reichweitenanzeige
- A: Ausschnitt
- F_{A}: Anfangsfüllstand
- F_{E}: Eingangswert
- F_{G}: gemessener Füllstand
- F_{K}: korrigierter gemessener Füllstand
- F_{M}: gleitender Mittelwert
- F_{S}: Startfüllstand
- F₁: erster Füllstandwert
- F₂: zweiter Füllstandwert
- ΔF: Fenster
- I_{B}: Beschleunigungsinformationen
- I_{N,S}: Neigungs- und Schräglageinformation
- R: Reichweite
- t: Zeit
- V: Verbrauch
- Vₘ: Momentanverbrauch
- ΔV: Fehler des Verbrauchs
- Z: Zeitabschnitt

## Patentansprüche

1. Verfahren zur Bestimmung des aktuellen Füllstands eines Kraftfahrzeugtanks, enthaltend folgende Schritte:
A) Bestimmung des Anfangsfüllstands (F_{A}) des Kraftfahrzeugtanks beim Start des Kraftfahrzeugmotors (1) als Eingangswert (F_{E}),
B) Ermittlung eines ersten Füllstandwerts (F₁) aus einem mit einer Füllstandmeßvorrichtung (3) gemessenen Füllstand (F_{G}) und Ermittlung eines zweiten Füllstandwertes (F₂) und eines Fensters (ΔF) um den zweiten Füllstandwert (F₂) aus einem Verbrauchswert (V) des Kraftfahrzeugmotors und aus dem Eingangswert (F_{E});
C) Vergleich des ersten Füllstandwerts (F₁) mit dem Fenster (ΔF) um den zweiten Füllstandwert (F₂);
D) Entscheidung, ob der erste oder der zweite Füllstandwert (F₁, F₂) der neue Eingangswert (F_{E}) sein soll;
E) Anzeige (7) des neuen Eingangswerts (F_{E}) als Füllstand und
F) Beendigung des Verfahrens (19), falls der Kraftfahrzeugmotor ausgeschaltet (17) ist oder Wiederholung des Verfahrens ab Verfahrensschritt B, falls der Kraftfahrzeugmotor läuft (18).

2. Verfahren gemäß Anspruch 1, **dadurch gekennzeichnet, daß** die Bestimmung des Anfangsfüllstands (F_{A}) des Kraftfahrzeugtanks beim Start des Kraftfahrzeugmotors (1) mindestens einen der folgenden Schritte umfaßt:
- Messung des Startfüllstands (2) mit der Füllstandmeßvorrichtung (3) und
- Korrektur des gemessenen Füllstands (4).

3. Verfahren gemäß Anspruch 1, **dadurch gekennzeichnet, daß** die Ermittlung des ersten Füllstandwertes (F₁) aus dem mit der Füllstandmeßvorrichtung (3) gemessenen Füllstand (F_{G}) mindestens einen der folgenden Schritte umfaßt:
- Messung des Füllstands (9) mit der Füllstandmeßvorrichtung (3);
- Korrektur des gemessenen Füllstands (10) und
- Bildung des gleitenden Mittelwertes (11).

4. Verfahren gemäß Anspruch 2 und/oder 3, **dadurch gekennzeichnet, daß** die Korrektur des gemessenen Füllstands (4, 10) unter Zuhilfenahme von Kraftfahrzeuglageund/oder Beschleunigungsinformationen erfolgt.

5. Verfahren gemäß Anspruch 4, **dadurch gekennzeichnet, daß** die Kraftfahrzeuglageinformationen die Neigung und/oder Schräglage des Kraftfahrzeugs umfassen, wobei die Neigung und/oder die Schräglage durch mindestens einen Sensor (21) erfaßt werden.

6. Verfahren gemäß Anspruch 1, **dadurch gekennzeichnet, daß** die Ermittlung des zweiten Füllstandwertes (F₂) und des Fensters (ΔF) um den zweiten Füllstandwert (F₂) folgende Schritte umfaßt:
- Bestimmung des Verbrauchs (V) durch Aufintegration (5) des Momentanverbrauchs (Vₘ);
- Berechnung des zweiten Füllstandwertes (F₂) durch Bildung der Differenz von Eingangswert (F_{E}) und Verbrauch (V) und
- Berechnung des Fensters (ΔF) um den zweiten Füllstandwert (F₂) aus den Fehlern in der Bestimmung des Verbrauchs (V).

7. Verfahren gemäß Anspruch 1, **dadurch gekennzeichnet, daß** der erste Füllstandwert (F₁) der neue Eingangswert (F_{E}) ist, falls der erste Füllstandwert (F₁) in dem Fenster (ΔF) um den zweiten Füllstandwert (F₂) liegt und daß der zweite Füllstandwert (F₂) der neue Eingangswert (F_{E}) ist, falls der erste Füllstandwert (F₁) außerhalb des Fensters (ΔF) um den zweiten Füllstandwert (F₂) liegt.

8. Verfahren gemäß Anspruch 1, **dadurch gekennzeichnet, daß** die Anzeige (7, 25) eine digitale Anzeige ist.

9. Verfahren gemäß Anspruch 1, **dadurch gekennzeichnet, daß** eine Anzeige der sich aus dem aktuellen Füllstand ergebenden Reichweite des Kraftfahrzeugs erfolgt.

10. Verfahren gemäß Anspruch 1, **dadurch gekennzeichnet, daß** die Füllstandmeßvorrichtung (3) bei einem symmetrischen Tank ein zentral angeordneter Tankstandgeber ist.

11. Verfahren gemäß Anspruch 1, **dadurch gekennzeichnet, daß** die Füllstandmeßvorrichtung (3) bei einem Satteltank mindestens zwei in beiden Kammern angeordnete Tankstandgeber umfaßt.

12. Verwendung eines Verfahrens gemäß Anspruch 1 zur Überprüfung der Funktion der Füllstandmeßvorrichtung, **dadurch gekennzeichnet, daß** bei jedem Durchlauf des Verfahrens nach dem Vergleich des ersten Füllstandwertes (F₁) mit dem Fenster (ΔF) um den zweiten Füllstandwert (F₂) kontrolliert wird, wie häufig der erste Füllstandwert (F₁) innerhalb des Fensters (ΔF) liegt.
